# EUROPÄISCHE PATENTSCHRIFT

(11) **EP 3 739 127 B1**
(45) Veröffentlichungstag und Bekanntmachung des Hinweises auf die Patenterteilung: **02.08.2023**
(21) Anmeldenummer: 20184717.5
(22) Anmeldetag: 01.04.2009
(51) Int. Cl.: E02B 17/00, E02B 3/06

(54) **VORRICHTUNG UND VERFAHREN ZUR DÄMPFUNG UND STREUUNG VON HYDROSCHALL UND/ODER WELLENBEWEGUNGEN IN EINER FLÜSSIGKEIT**
DEVICE AND METHOD FOR DAMPING AND SCATTERING HYDROSOUND AND/OR WAVE MOTION IN A LIQUID
DISPOSITIF ET PROCÉDÉ D'AMORTISSEMENT ET DE DIFFUSION D'ULTRASONS HYDRO ET/OU DE MOUVEMENTS ONDULATOIRES DANS UN LIQUIDE

(30) Priorität: 03.04.2008 DE 102008017418
(43) Veröffentlichungstag der Anmeldung: 18.11.2020
(62) Teilanmeldung aus: 18158100.0
(73) Patentinhaber: Elmer, Karl-Heinz, 31535 Neustadt am Rübenberge (DE)
(72) Erfinder: Elmer, Karl-Heinz, 31535 Neustadt am Rübenberge (DE)
(74) Vertreter: Gramm, Lins & Partner Patent- und Rechtsanwälte PartGmbB

(56) Entgegenhaltungen:
- EP-A2- 0 033 238
- FR-A- 1 267 953
- NL-A- 7 301 913
- US-A- 3 022 632
- "ANNOUNCEMENT", POPULAR MECHANICS, HEARST COMMUNICATIONS INC., NEW YORK, NY, US, Bd. 172, Nr. 5, 1. Mai 1995 (1995-05-01), Seite 26, XP000508324, ISSN: 0032-4558

## Beschreibung

Die Erfindung betrifft eine Vorrichtung und Verfahren zur Dämpfung und Streuung von Hydroschall in einer Flüssigkeit, insbesondere Wasser, mittels zumindest eines ein Gas einschließenden Hüllkörpers.

Schallwellen breiten sich in Flüssigkeiten sehr gut aus, da Flüssigkeiten, wie zum Beispiel Wasser, im Allgemeinen ein geringes Dämpfungsvermögen aufweisen. Im Meer werden Schallwellen, hervorgerufen zum Beispiel durch Wale oder Unterwasserbaustellen, über viele Kilometer transportiert. Dabei können Schallwellen für die Lebewesen im Wasser, wie marine Säuger oder Fische, gefährlich werden. Dies betrifft insbesondere künstlich erzeugte Schallwellen. Besonders starke Schallemissionen im Wasser treten beim Rammen von Pfählen auf.

Die Errichtung von Offshore-Windenergieanlagen ist neben dem zunehmenden Schiffsverkehr eine der in Zukunft anwachsenden Quellen von Schallemissionen im Wasser, welche wesentliche Belastungen für Lebewesen darstellen. Um die Lebewesen, insbesondere geschützte Arten wie beispielsweise Schweinswale und Robben, durch technische Anlagen im Meer, in Hafenbereichen und in anderen Gewässern nicht zu beeinträchtigen, sind Maßnahmen zur Reduktion der Schallemissionen und zur Einhaltung von zulässigen Grenzwerten erforderlich.

Zur Reduktion der Ausbreitung von Schall im Wasser sind die Schalldämmung und die Schalldämpfung bekannt.

Schalldämmung ist die Behinderung der Schallausbreitung durch reflektierende Hindernisse. Die Stärke der Reflexion ist abhängig von dem Unterschied der Wellenwiderstände des schallführenden Mediums und dem behindernden Medium. Dieser Effekt ist besonders deutlich beim Schallübergang von Wasser auf Luft und dann wieder von Luft auf Wasser. Die Schallausbreitung im Wasser mit dem Prinzip einer schalldämmenden und abschirmenden Luftschicht zu reduzieren, ist aus der DE 103 02 219 A1 bekannt. Das in der Schrift offenbarte Verfahren zur Reduzierung der Übertragung von Schall und Wellenbewegungen bei einem im Wasser befindlichen Objekt bezieht sich darauf, die das Objekt vollständig zu umgebende Luftschicht etwa durch Schläuche, Luftpolster, Schaumschichten oder porenbeziehungsweise lufthaltige Folien zu realisieren. In jedem Fall muss eine vollständig formschlüssig geschlossene Umhüllung der Schallquelle vorgenommen werden, um die erhoffte Wirkung der Schalldämmung zu erreichen. Bereits kleine Öffnungen, wie bei einem Türspalt oder ähnlich den Körperschallbrücken, reduzieren die Wirkung der Schalldämmung wesentlich und machen sie uneffektiv. Abhängig von der Dimensionierung der Schalldämmung ist die schalldämmende Wirkung in den Resonanzbereichen der Vorrichtung stark gemindert.

Schalldämmung erfordert also eine vollständige Umhüllung der Schallquelle. Beim Herstellen aufgelöster Gründungsstrukturen oder beim Rammen von Spundwänden im Wasser ist eine vollständige, formschlüssige Umhüllung nur mit sehr hohem Aufwand, meistens jedoch nicht zu erreichen. Vor allem im Offshore-Bereich mit Seegang und großen Wassertiefen ist die Handhabung von Schalldämmkonstruktionen aufwändig. Eine vollständige Entkopplung, also das Einbringen einer durchgängigen vertikalen Luftschicht in das Wasser, die die Schallquelle vollständig umschließt, ist insbesondere bei Wassertiefen über zehn Metern mit einem wirtschaftlich vertretbaren Aufwand nur schwer realisierbar. Gründe dafür sind der anstehende Wasserdruck und die horizontalen Kräfte aus der Strömung. Eine Entkopplung, also Schalldämmung, mit luftgefüllten Hohlkörpern, wie sie in der Druckschrift DE 103 02 219 A1 beschrieben ist, weist stets Schallbrücken und Resonanzbereiche auf. So ist die Luftschicht an den Verbindungsstellen der einzelnen Hohlkörper extrem dünn oder sogar unterbrochen. Da die Resonanzfrequenz der Hohlkörper oftmals in den unteren Frequenzbereichen unter 100 Hz liegt, werden diese, typischerweise bei Bohr- und Rammarbeiten häufig erzeugten Frequenzen durch den schwingenden Hohlkörper weitergeleitet oder sogar verstärkt.

Weitere Vorrichtungen zur Schalldämmung beschreiben Dr. Manfred Schulz-von Glahn, Dr. Klaus Betke und Dr. Georg Nehls in ihrer Schrift "Minderung des Unterwasserschalls bei Rammarbeiten für Offshore-WEA - Praktische Erprobung verschiedener Verfahren unter Offshore-Bedingungen". Darüber hinaus wird in der Schrift auch ein Schall streuendes und dämpfendes Verfahren, der sogenannte Blasenschleier, erwähnt.

Schalldämpfung ist dagegen die Absorption des Schalls, also die Umwandlung der mechanischen Schallenergie in Wärme, wodurch die Schallenergie vernichtet wird. Die Druckschrift US 3,647,022 A zeigt eine Vorrichtung zum Dämpfen von Schallwellen in einem flüssigen Medium, bei dem einzelne Schalldämpferelemente an einem Trägerelement angeordnet sind, wobei eine Wand eines das flüssige Medium aufnehmenden Gefäßes das Trägerelement bildet, das den resultierenden Schalldruck aufnimmt.

Bei Flüssigkeiten, die als Medium ein geringes Dämpfungsvermögen besitzen, kann der Schall auch zum Beispiel durch die Schwingungen einer Vielzahl von Gasblasen gedämpft werden. Die Schallanregung im Bereich der Eigenfrequenz der einzelnen Gasblase führt zu einer sehr effektiven Reduzierung der Schallamplituden sowohl durch Streuung als auch durch Absorption des Schalls. Die Eigenfrequenz einer Gasblase ist dabei unter anderem abhängig von der Elastizität, dem Druck und dem Durchmesser der Gasblase.

Bei Rammarbeiten in geringen Wassertiefen sind Schleier aus Gasblasen bereits erfolgreich eingesetzt worden. Vom Durchmesser der Gasblasen hängt neben der Resonanzfrequenz auch die Aufstiegsgeschwindigkeit der Gasblasen ab. In einem Schleier mit einem Gemisch aus Gasblasen unterschiedlicher Durchmesser steigen die größeren Blasen sehr viel schneller auf. Die langsam aufsteigenden Gasblasen müssen mit geeigneten Maßnahmen von Strömungseinflüssen abgeschirmt werden. Dabei ist es üblich, einen sogenannten geführten Blasenschleier einzusetzen, bei dem der Schleier aus Gasblasen innerhalb eines Körpers aufsteigt, wobei der Körper strömungsundurchlässig ist und somit die auf ihn wirkenden Horizontalkräfte aus der Strömung aufnehmen muss. Mittels eines Schleiers aus Gasblasen können die hydroakustischen Eigenschaften des Mediums Wasser beeinflusst werden. Die Gasblasen werden dazu üblicherweise aus der oberhalb des Wasserspiegels vorhandenen Umgebungsluft gewonnen und mittels technischer Einrichtungen wie Pumpen und Leitungen im Wasser meistens in mehreren Ebenen erzeugt.

Eine jede Gasblase ist im Wasser gelöst und wird durch die Oberflächenspannung des Wassers zusammengehalten. Die Übertragung des Schalls wird hierbei im Wesentlichen durch Dämpfung, Streuung und Absorption reduziert. Ein solcher Schleier wird mittels auf dem Boden verlegter Schläuche und/oder Rohrleitungen erzeugt. Die Schläuche und/oder Rohrleitungen weisen Öffnungen definierter Größe und Anzahl auf, durch die Gas in das umgebende Wasser gedrückt wird. Für die Blasen wird meistens die oberhalb des Wasserspiegels anstehende Luft als Gas verwendet. Diese wird von Kompressoren verdichtet und zu den am Boden verlegten Schläuchen und/oder Rohrleitungen befördert. Die Erzeugung solcher Schleier aus Blasen definierter Größe und Anzahl ist mit zunehmender Wassertiefe aufwändiger, da das Volumen der einzelnen aufsteigenden Blase abhängig von der Wassertiefe ist. Beim Aufsteigen der Gasblase im Wasser nimmt der die Gasblase umgebende Wasserdruck ab, was zu einer erheblichen Änderung der Größe der Gasblase und damit des wirksamen Frequenzbereichs sowie zu unkontrollierten Bedingungen durch nicht steuerbare Zerteilungen und Vereinigungen der Gasblasen führt. Da sich mit dem Volumen der Blase deren Resonanzfrequenz verändert, müssen in unterschiedlichen Tiefen, beispielsweise alle fünf Meter, kontinuierlich Blasen erzeugt werden, um einigermaßen kontrollierte Bedingungen der Schalldämpfung zu erreichen.

Für die Erzeugung eines Schleiers aus Blasen zur Dämpfung von Schallemissionen aus industriellen Anlagen wie Öl-Bohrungen oder Rammarbeiten für Windkraftanlagen müssen große Mengen komprimierten Gases verdichtet und befördert werden. Die dazu notwendigen Anlagen weisen einen hohen Energiebedarf und Betriebskosten auf, die mit zunehmender Wassertiefe steigen. Schallemissionen werden nicht nur durch das Wasser, sondern auch durch den Boden übertragen und können dann entfernt von der Schallquelle erneut in das Wasser emittiert werden. Es ist jedoch wirtschaftlich und ökologisch fragwürdig, einen großräumigen Schleier zu erzeugen. Auf den Schleier wirken auch die Strömungen im Wasser negativ, was zu einer unkontrollierbaren Entwicklung der Blasen und schließlich zu einer weniger effektiven Schalldämpfung führt.

Die FR 1 267 953 A beschreibt eine Schutzvorrichtung für maritime Strukturen, bei der eine Vielzahl mit Luft gefüllter Ballons an Kabeln an dem Boden verankert ist. Die Ballons sind miteinander verbunden, an dem unteren Ende der Kabel können absenkbare Kisten angeordnet sein, alternativ sind permanente Verankerungen im Meeresboden oder Gewichtskugeln an den Enden der Kabel angeordnet. Schwimmkörper gewährleisten eine vertikale Erstreckung der Kabel.

Die US 3 022 632 A zeigt ein an einem Anker im Meeresboden befestigtes Seil mit unterschiedlich großen, luftgefüllten Kugeln oder Ballons.

Die EP 033 298 A2 betrifft eine flexible, schwimmfähige Sperre mit mehreren Auftriebsröhren und einer oder mehreren flexiblen Ballaströhren, wobei die Auftriebsröhren und Ballaströhren im Wesentlichen parallel zueinander untereinander angeordnet sind. Die Ballaströhren enthalten Ballastflüssigkeit und sind teilweise mit einem Schaumstoff sowie mit Gas gefüllt.

Der Erfindung liegt die Aufgabe zugrunde, eine Vorrichtung und ein Verfahren zu schaffen, mit der die Übertragung und Ausbreitung von Schall in einer Flüssigkeit, insbesondere im Wasser, reduzierbar ist, wobei die Vorrichtung sowohl im stehenden Gewässer als auch bei starker Strömung möglichst einfach, fehlerfrei und kontrollierbar einsetzbar ist und unabhängig von der Wassertiefe einen geringen Energiebedarf aufweist sowie möglichst keine Betriebskosten verursacht und auch der großräumige Einsatz kostengünstig möglich ist.

Die Aufgabe wird erfindungsgemäß mit einer Vorrichtung gemäß den Merkmalen des Anspruchs 1 und mit einem Verfahren mit den Merkmalen des Anspruchs 11 gelöst. Die weitere Ausgestaltung der Erfindung ist den Unteransprüchen zu entnehmen.

Erfindungsgemäß ist also eine Vorrichtung in einer Flüssigkeit vorgesehen, die von der Flüssigkeit, insbesondere Wasser, insbesondere in Schallausbreitungsrichtung durchströmbar ist und eine Vielzahl, jeweils ein Gas einschließende Hüllkörper aufweist, welche zueinander beabstandet und jeweils allseitig der Flüssigkeit umgeben sind. Nachfolgend wird von Wasser als Beispiel einer Flüssigkeit gesprochen. Durch die Beabstandung der einzelnen Hüllkörper und somit auch der einzelnen Gasvolumina oder Gasblasen ist es möglich geworden, mit industriell vorgefertigten Hüllkörpern die Übertragung und Ausbreitung von Schall im Wasser zu reduzieren, wobei Wasserströmungen und Lebewesen die Vorrichtung passieren können, ohne große Kräfte auf die Vorrichtung auszuüben. Die Erfindung besteht darin, die schalldämpfende Wirkung eines konventionellen Blasenschleiers, dessen einzelne Luftblasen durch die Oberflächenspannung des Wassers zusammengehalten werden, durch einen Blasenschleier mit künstlich hergestellten Hüllkörpern als Blasenhüllen zu ersetzen. Die Hüllkörper werden dabei allseitig von Wasser umströmt. Idealerweise besteht der Hüllkörper aus einem elastischen Material und ist mit Luft gefüllt. Zweckmäßigerweise ist die Vorrichtung so eingerichtet, dass die einzelnen Hüllkörper am Aufsteigen gehindert werden. Erfindungsgemäß ist der Hüllkörper mit einem Gas und mit einem weichen, offen- und/oder geschlossenporigen Material gefüllt ist, welches otional ein hohes Dämpfungsvermögen aufweist. So ist es möglich, die akustischen Eigenschaften des Gasvolumens zu verbessern oder für den Einsatzzweck einzustellen.

Dazu weist die Vorrichtung erfindungsgemäß ein Trägerelement und einen Massenkörper auf. Die Hüllkörper sind dabei zueinander beabstandet an dem Trägerelement angeordnet. Die frei im Wasser verteilten und an einem Trägerelement angeordneten blasenartigen Hüllkörper werden durch den Massenkörper am Aufsteigen gehindert.

Die Hüllkörper sind jedoch weder kraft- noch formschlüssig oder raumtrennend untereinander verbunden.

Überraschenderweise wird es durch die Beabstandung der Hüllkörper möglich, Schallausbreitungen im Wasser, auch Hydroschall genannt, zu reduzieren. Dabei wird ein Effekt ähnlich der Schalldämpfung und Schallstreuung mittels eines Blasenschleiers erzeugt. Im Gegensatz zu den herkömmlichen Blasenschleiern wird das vom Hüllkörper eingeschlossene Gas durch den Massenkörper am Aufsteigen im Wasser gehindert. Somit bleiben die Gasvolumina erhalten und müssen nicht ständig erneuert werden. Eine insbesondere im Offshore-Bereich und bei großen Wassertiefen aufwändige, ständige Druckluftversorgung ist nicht erforderlich. Ebenso üben die herrschenden Umweltbedingungen im Wasser wie Strömung oder Wasserdruck nur einen geringen Einfluss auf die Vorrichtung aus, da diese vom Wasser durchströmt und/oder umspült wird, denn die wirksame Volumenkonzentration der Gasblasen liegt im Bereich von etwa einem Promille. Dabei sind die Hüllkörper zu einem Hydroschall emittierenden Körper radial, axial und in Umfangsrichtung beabstandet angeordnet. Ein in einem Hüllkörper eingeschlossenes Gasvolumen weist zudem eine konstante Masse auf und kann nicht mit einer anderen Gasblase verschmelzen oder sich teilen.

Damit sich die Vorrichtung durch die Auftriebskraft des Gases nicht an die Wasseroberfläche bewegt, ist es sinnvoll, dass die Vorrichtung durch den Massenkörper eine Gewichtskraft aufweist, die gleich und/oder größer der Auftriebskraft der Vorrichtung ist. Die Trägerelemente, an denen die Hüllkörper befestigt sind, sind nicht erfindungsgemäß als eine Vielzahl einzelner Seile ausgeführt, die in Bodennähe zumindest mittelbar, beispielsweise mittels eines Netzes, an wenigstens einem Massenkörper befestigt sind. Diese durch den Auftrieb der Hüllkörper weitestgehend vertikal ausgerichteten Trägerelemente sind horizontal, zumindest begrenzt, frei beweglich. Sie stellen für Fische und andere Meeresbewohner kein Hindernis dar, da die Trägerelemente ausweichen, wenn ein Tier gegen das Trägerelement oder den Hüllkörper der Vorrichtung schwimmt.

Wie bei den konventionellen, natürlichen Luftblasen im Wasser stellen luftgefüllte Blasenhüllen aus einem flexiblen, dünnwandigen, elastischen Material, die im Wasser verteilt sind, gedämpfte Resonatoren dar. Die Schallanregung in der Nähe der Eigenfrequenz der Hüllkörper führt zu einer sehr effektiven Reduzierung der Schallamplituden sowohl durch Streuung als auch durch Absorption des Schalls. Die Dämpfungswirkung ist vor allem auf einen Bereich um die Eigenfrequenz der Hüllkörper und auf den Bereich oberhalb der Eigenfrequenz beschränkt. Dabei hängt die Eigenfrequenz von dem Durchmesser, der einstellbaren Elastizität und dem Innendruck des Hüllkörpers ab.

Der für die Schalldämpfung bei Offshore-Baustellen, also für einen Frequenzbereich von 100 Hz bis 1000 Hz geeignete Durchmesser eines Hüllkörpers liegt in einem Bereich von Millimetern bis wenigen Zentimetern. Für Frequenzen oberhalb von 1000 Hz liegen die geeigneten Durchmesser der Hüllkörper im Bereich von wenigen Millimetern und darunter.

Die einzelnen vorgefertigten Hüllkörper können durch die Wahl des Materials und des Durchmessers genau auf den erforderlichen Frequenzbereich abgestimmt und entsprechend im Wasser um den Schal emittierenden Körper verteilt werden, da sie im Gegensatz zu natürlichen Blasen ihre Position, insbesondere ihre vertikale Position, im Wasser und damit ihre Wirksamkeit nicht ändern.

Dadurch ergibt sich ein wesentlicher Vorteil gegenüber natürlichen Blasen und Blasenschleiern, denn die resonanzfähigen, luftgefüllten Hüllkörper mit hohem Dämpfungsvermögen können zum Beispiel problemlos mit Durchmessern mehrerer Zentimeter und weit darüber hinaus hergestellt werden. Bei Rammarbeiten im Wasser im Pegel bestimmenden unteren Frequenzbereich von etwa 50 Hz bis 600 Hz reduzieren gerade Blasen mit solchem Durchmesser den Hydroschall durch Resonanzschwingungen sehr effektiv. Darüber hinaus sind entsprechend große Blasen auch oberhalb der jeweiligen Eigenfrequenz bis im kHz-Bereich wirksam und können so den gesamten interessierenden Frequenzbereich abdecken.

Große natürliche Blasen sind instabil, steigen rasch auf und zerfallen. Auch sind sie wegen der erforderlichen Druckluftmenge wirtschaftlich kaum herstellbar. Da beim Einsatz der luftgefüllten Hüllkörper auf eine Druckluftversorgung verzichtet werden kann und sie im unteren Frequenzbereich auch um zirka 100 Hz resonanzfähig und sehr wirksam sind, können damit vorteilhaft auch die Hydroschallemissionen fertiger Offshore-Bauwerke, wie zum Beispiel Windkraftanlagen, im Betriebszustand wesentlich reduziert werden. Die unter Wasser abgestrahlte Schallenergie liegt im Allgemeinen bei allen Betriebszuständen in diesem unteren Frequenzbereich.

Die Verteilung der Blasen beziehungsweise Hüllkörper im Wasser bewirkt darüber hinaus eine Kompressibilität des Wasserkörpers, wodurch die Reduzierung der Schallamplituden sowohl durch einen wesentlich erhöhten wirksamen Streuungsquerschnitt als auch durch Absorption des Schalls verbessert wird.

Insgesamt hängt die frequenzabhängige Reduktion einer den Wasserkörper durchlaufenden Schallwelle im Wesentlichen von den Eigenfrequenzen, der Dämpfungskapazität, der Verteilung, der Konzentration der luftgefüllten Hüllkörper und der von der Schallwelle durchlaufenden Abmessung der Vorrichtung ab. Die wirksame Volumenkonzentration ist bei der erfindungsgemäßen Vorrichtung bereits im Bereich von einem Promille erreicht.

Von Vorteil für die Vorrichtung ist es, dass die Hüllkörper vertikal im Wasser und/oder in einer nicht von der Erfindung umfassten Ausgestaltung horizontal flächig am Boden positionierbar sind. Da sich die Schallwellen auch über den Boden ausbreiten und entfernt von der Schallquelle in das Wasser emittieren können, ist es so möglich, mit geringem Aufwand auch die Schallausbreitung über dem Boden zu reduzieren. Die Bodenbedeckung ist mit an Seilen oder Netzen befestigten Hüllkörpern ebenso möglich wie mit auf dem Boden verteilten Käfigen, in denen die mit Gas gefüllten Hüllkörper angeordnet sind.

Besonders vorteilhaft ist es, dass der Hüllkörper eine flexible Membran ist, die aus einem dünnwandigen, elastischen Material besteht, welches ein hohes Dämpfungsvermögen aufweist. Die Flexibilität und Elastizität des Hüllkörpers erlaubt eine wirksame Schwingungsanregung des Gasvolumens wie bei einer natürlichen Gasblase. Durch den Einsatz eines Materials mit hohem Dämpfungsvermögen wird die Gesamtdämpfung des in Resonanz schwingenden Gasvolumens erhöht. Günstig ist es, dass der Hüllkörper aus einem organischen und/oder anorganischen Stoff besteht. Es ist beispielsweise möglich, den Hüllkörper aus einer Blasenalge (Ventricaria ventricosa) zu bilden, die auf dem Trägerelement oder auf dem Meeresboden wächst. Andere geeignete Materialien sind Latex oder Tierdärme.

Das Trägerelement kann nicht erfindungsgemäß aus einem Gewebeband, einem Seil und/oder einem Netz gebildet werden. Praktisch ist es, dass das Trägerelement flexibel ist. Eine Positionierung der an einem Seil angeordneten Hüllkörper im Wasser ist besonders einfach, da ein Ende des Seils an einem weiteren Trägerelement, Netz, und/oder Seil mit einem Massenkörper am Boden befestigt ist und das andere Ende des Seils mit einem Schwimmkörper auf dem Wasserspiegel gehalten wird. Eine definierte Positionierung der Hüllkörper, insbesondere in vertikaler Richtung, ist so problemlos möglich.

Erfindungsgemäß sind die Hüllkörper und das Trägerelement einteilig aus demselben Material hergestellt. Hierdurch ist es möglich, ein einteiliges Trägerelement mit integrierten Gasvolumina herzustellen, bei dem das Trägerelement dann den Hüllkörper bildet.

Erfindungsgemäß ist das Trägerelement und der Hüllkörper einteilig aus einem dünnen, elastischen Schlauchmaterial hergestellt sind, wobei die Hüllkörper gleicher und/oder unterschiedlicher Größe durch Einschnürungen oder Schweißstege des Schlauchmaterials begrenzt sind. Ein solches Trägerelement kann besonders einfach hergestellt werden. Beispielsweise ist dabei die Ausführung des Trägerelements als Kunststoffschlauch möglich, dessen Durchgängigkeit in bestimmten Abständen durch Einschnürungen oder Schweißstege unterbrochen wird, wobei der dabei entstehende Raum zwischen den Einschnürungen oder Schweißstegen wahlweise mit einem druckbeaufschlagten Gas gefüllt werden kann oder leer bleibt.

Für einen zeitlich befristeten Einsatz, beispielsweise bei Bauarbeiten, ist es günstig, dass der Hüllkörper und/oder das Trägerelement aus einem biologisch abbaubaren Stoff hergestellt sind. Da sich solche Stoffe rückstandsfrei zersetzen, können sie nach dem Ende der Schallemission im Wasser verbleiben, ohne Flora und Fauna zu beeinflussen. Der Einsatz solcher Einwegprodukte ist auch ökonomisch sinnvoll, da keine Bergungskosten entstehen.

Günstig ist es, dass die Hüllkörper mit dem Trägerelement zur Befestigung an der Schallquelle vorgesehen sind. Da die vom Hüllkörper umschlossenen Gasvolumina gemeinsam mit dem Rammpfahl in das Wasser eingebracht werden, ist es möglich, auf ein gesondertes Ausbringen von Gasblasen zum Teil oder ganz zu verzichten, was die Kosten der Baustelleneinrichtung senkt. Die direkt am Rammpfahl befestigten Hüllkörper zerplatzen beim Auftreffen auf den Boden, wodurch das Gasvolumen frei wird, als natürliche Gasblase aufsteigt und verloren geht. Der leere Hüllkörper und das Trägerelement verbleiben dann am Boden und zersetzen sich mit der Zeit. Die Hüllkörper können dabei mit dem Trägerelement an der Schallquelle einfach oder in mehreren Lagen befestigt sein.

Vorteilhaft ist es, dass die Vorrichtung im mit Wasser gefüllten Inneren eines Bauteils und/oder eines insbesondere als Stahlrohr ausgeführten Rammpfahls angeordnet sind. Hierdurch ist es möglich, die Vorrichtung bereits vor dem Verschiffen des Bauteils in diesem anzuordnen. Eine Handhabung der erfindungsgemäßen Vorrichtung auf der Baustelle entfällt dann, was den Einsatz und insbesondere die Wirtschaftlichkeit der Vorrichtung deutlich verbessert.

Als besonders sinnvoll erweist es sich, dass das Trägerelement in einem Käfig angeordnet ist. Ein solcher Käfig kann an Land industriell auf den konkreten Einsatzzweck hin vorbereitet werden und wird dann am Einsatzort aufgestellt. Blasenschleier von beliebiger Konzentration der Blasen sowie größere Abmessungen der Breite, Länge, Höhe und des Durchmessers der Vorrichtung lassen sich damit einfach bilden.

Für eine optimale Ausnutzung dieser Eigenschaft ist es angebracht, dass der Käfig in seiner tragenden Struktur aus festem Material wie Metall oder Kunststoff besteht und/oder mehrere Käfige über- und nebeneinander anordbar und/oder fixierbar sind. So ist es möglich, die Käfige aus ISO-Containern ohne Wandflächen herzustellen, was einen problemlosen Transport der Käfige an Land und zu Wasser ermöglicht und äußerst wirtschaftlich ist.

Außerordentlich nützlich ist es, dass die Hüllkörper mittels der Trägerelemente in einem Käfig festgelegt sind. So ist es möglich, die Hüllkörper an Land industriell auf den konkreten Einsatzzweck hin vorzubereiten. Die Hüllkörper können an Land und/oder später im Wasser mit Gas befüllt werden. Die mit Gas gefüllten Hüllkörper sind in dem Käfig auf einfache Weise geschützt vor übermäßiger mechanischer Belastung und problemlos an Land und auf dem Wasser zu transportieren. Auch das Aufstellen und Bergen der Hüllkörper am Einsatzort kann so schnell und mit standardisiertem Gerät erfolgen. Nach dem Ende des Einsatzes werden die Käfige einfach aus dem Wasser geborgen und können erneut verwendet werden.

Eine andere günstige Ausnutzung der Erfindung ist es, dass zumindest zwei Käfige ineinander teleskopisierbar anordenbar sind. Hierdurch ist ein kompakter Transport an Land und ein schneller Auf- und Abbau im Wasser möglich.

Günstig ist es, dass der Hüllkörper ein Ventil aufweist. Mittels des Ventils ist es möglich, dass der Gasdruck in dem Hüllkörper vor, während und/oder nach einem Einsatz veränderbar ist. Dabei ist es besonders vorteilhaft, dass die Ventile mehrerer Hüllkörper miteinander verbunden sind. Hierdurch ist es möglich, den Gasdruck in mehreren Hüllkörpern gleichzeitig zu verändern.

Vorteilhaft ist es, dass jeder einzelne Hüllkörper individuell mit unterschiedlichem Gas und/oder bei einem unterschiedlichen Druck befüllt ist. So ist es möglich, dass jeder Hüllkörper abhängig von den Anforderungen wie Position, Wassertiefe und Schallfrequenz mit den benötigten Resonanz- und Dämpfungseigenschaften hergestellt werden kann.

Besonders praktisch ist es, dass die Vorrichtung mit einem Schwimmkörper ausgestattet ist. Durch den Schwimmkörper, der sich stets an der Wasseroberfläche befindet, ist es möglich, den Transport, das Auslegen und das Einholen der Vorrichtung auf einfache Weise durchzuführen, beispielsweise ähnlich wie bei einem Fischernetz.

Günstig ist es, dass einzelne Hüllkörper und/oder Trägerelemente zur Ergänzung vorhandener Hüllkörper und/oder zur Erzeugung von Auftrieb, Stabilität und/oder zur räumlichen Ausbildung der Vorrichtung vor Ort mit einem Gas, beispielsweise Druckluft, befüllbar sind. Hierdurch ist es möglich, die Vorrichtung mit einem geringen Packmaß an den Einsatzort zu transportieren und beispielsweise die räumliche Ausbildung der Vorrichtung unter Wasser ohne oder mit nur geringem personellen Einsatz mittels Druckluft zu realisieren.

Die Vorrichtung ist zur Dämpfung und Streuung von Hydroschall einsetzbar. Hierdurch wird es beispielsweise möglich, seismische Untersuchungen eines Gewässergrunds gegen äußere Störgeräusche abzuschirmen.

Als zweckmäßig erwiesen hat es sich, dass einzelne oder mehrere Hüllkörper in einem Schutzgehäuse, insbesondere aus einem Drahtgeflecht oder einem formstabilen Kunststoff, angeordnet sind, wobei das Schutzgehäuse zumindest eine Öffnung aufweist und von dem Wasser durchströmbar ist. Hierdurch ist es möglich, die empfindlichen, beispielsweise aus dünnem Latex hergestellten Hüllkörper vor Beschädigungen zu schützen. Die Hüllkörper sind besonders beim Transport und beim Einbau hohen mechanischen Beanspruchungen ausgesetzt, können aber auch im Wasser von Tieren, beispielsweise durch Fraß, oder von mit der Strömung transportierten Gegenständen beschädigt werden.

Die Erfindung lässt verschiedene Ausführungsformen zu. Zur weiteren Verdeutlichung ihres Grundprinzips sind zwei davon in der Zeichnung dargestellt und werden nachfolgend beschrieben. Die Zeichnung zeigt in
- Fig. 1 -: eine schematische Seitenansicht einer Vorrichtung;
- Fig. 2 -: eine geschnittene und vergrößerte Darstellung eines Abschnitts der in Figur 1 gezeigten Vorrichtung;
- Fig. 3 .: eine horizontal geschnittene schematische Darstellung einer Offshore-Baustelle mit der erfindungsgemäßen Vorrichtung;
- Fig. 4 -: eine schematische Darstellung eines Schnitts durch eine Offshore-Baustelle mit der erfindungsgemäßen Vorrichtung in einer ersten Ausführungsform;
- Fig. 5 -: eine schematische Darstellung eines Schnitts durch eine Offshore-Baustelle mit der erfindungsgemäßen Vorrichtung in einer zweiten Ausführungsform.

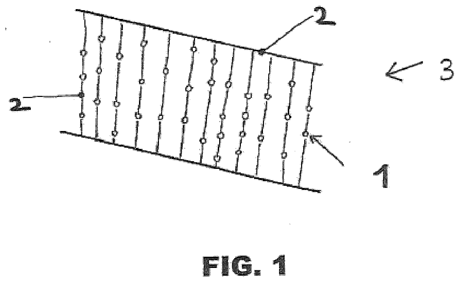

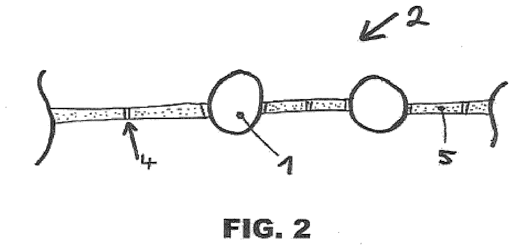

Die Figuren 1 und 2 zeigen eine Vorrichtung 3 mit einem Trägerelement 2. Das Trägerelement 2 besteht in der hier dargestellten Ausführungsform aus einer Vielzahl von Schläuchen aus einer Kunststofffolie. Jeder einzelne Schlauch ist in mehrere Abschnitte unterteilt. Einzelne Abschnitte sind mit einem Gas gefüllt und bilden zueinander beabstandete und druckbeaufschlagte Hüllkörper 1. Die einzelnen Abschnitte sind durch Schweißstege 4 getrennt. Die Abschnitte sind unterschiedlich groß. Abschnitte, die nicht mit einem Gas befüllt sind, weisen in der hier gezeigten Ausführungsform eine Perforation 5 auf.

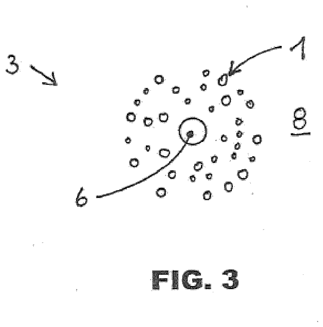

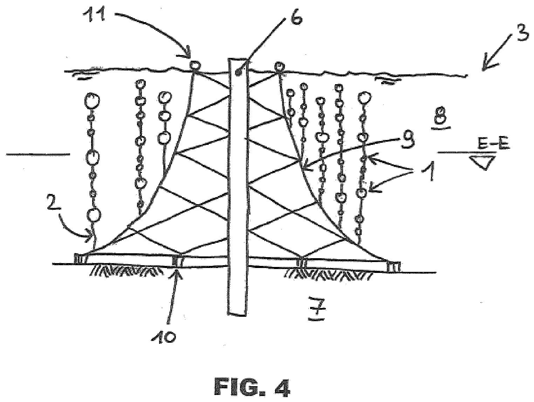

Figur 3 zeigt eine in der Ebene E-E der Figur 4 horizontal geschnittene schematische Darstellung einer Offshore-Baustellen, bei der ein Rammpfahl 6 in den Boden gerammt wird. Die Vorrichtung 3 weist eine Vielzahl von mit Gas gefüllten Hüllkörpern 1 auf, die zueinander beabstandet, untereinander flexibel verbunden und jeweils allseitig von Wasser 8 umgeben sind. Dies ermöglicht es, dass die Vorrichtung 3 vom Wasser 8, insbesondere in Schallausbreitungsrichtung, durchströmbar ist. So können Wasserströmung und Lebewesen die Vorrichtung 3 passieren, ohne große Kräfte auf die Vorrichtung 3 auszuüben. Die Hüllkörper 1 sind dabei zu dem Hydroschall emittierenden Körper 6 radial, axial und in Umfangsrichtung beabstandet angeordnet.

Figur 4 zeigt eine schematische Darstellung eines Schnitts durch eine Offshore-Baustelle, bei der ein Rammpfahl 6 in den Boden 7 gerammt wird. Den Rammpfahl 6 umgebend ist im Wasser 8 die Vorrichtung 3 angeordnet. Die Vorrichtung 3 besteht aus einem Netz 9, an dem Trägerelemente 2 angeordnet sind. An den Trägerelementen 2 sind Gas einschließende Hüllkörper 1 befestigt. Die Hüllkörper 1 sind dabei zu dem Hydroschall emittierenden Körper 6 radial, axial und in Umfangsrichtung beabstandet angeordnet. Um dem Auftrieb des Gases entgegenzuwirken, ist das Netz 9 mit Massenkörpern 10 auf dem Boden fixiert. Oberhalb der Wasseroberfläche ist das Netz 9 an Schwimmkörpern 11 befestigt.

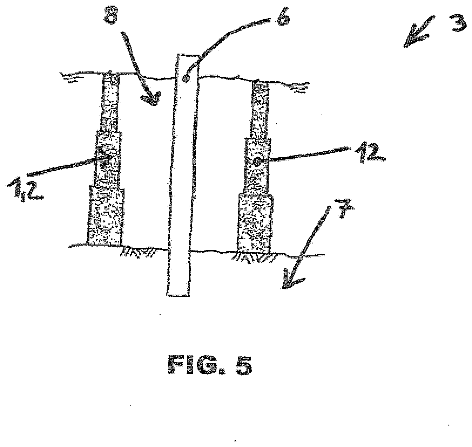

Figur 5 zeigt wie Figur 4 einen Schnitt durch eine Offshore-Baustelle, bei der ein Rammpfahl 6 in den Boden 7 gerammt wird. Im Gegensatz zu Figur 3 besteht die den Rammpfahl 6 umgebende Vorrichtung 3 im Wasser 8 aus Käfigen 12. Die Käfige 12 sind offen und werden wie das Netz 9 in Figur 4 vom Wasser 8 durchströmt. In den Käfigen 12 sind die Gas einschließenden Hüllkörper 1 mittels der in den Käfigen 12 aufgespannten Trägerelemente 2 befestigt. Es können mehrere Käfige 12 neben- und übereinander gestapelt werden. Ebenso ist es möglich, die Käfige 12 derart auszuführen, dass mehrere Käfige 12 ineinander passen und am Einsatzort teleskopartig auseinandergezogen werden.

## Patentansprüche

1. Vorrichtung (3) in einer Flüssigkeit zur Dämpfung und Streuung von Hydroschall in der Flüssigkeit, insbesondere Wasser (8), mittels eines ein Gas einschließenden Hüllkörpers (1), wobei die Vorrichtung (3) von der Flüssigkeit (8) durchströmbar ist und eine Vielzahl, jeweils ein Gas einschließende Hüllkörper (1) aufweist, welche zueinander beabstandet und jeweils von der Flüssigkeit (8) umgeben sind, wobei die Vorrichtung (3) weiter ein Trägerelement (2) und einen Massenkörper (10) aufweist, wobei die Hüllkörper (1) zueinander beabstandet an dem Trägerelement (2) angeordnet sind und die Hüllkörper (1) zu einem einen Hydroschall emittierenden Körper (6) radial, axial und in Umfangsrichtung beabstandet anordenbar sind, **dadurch gekennzeichnet, dass** die Hüllkörper (1) mit dem Gas und einem weichen, schaumartigen, offen- und/oder geschlossenporigen Material gefüllt sind und das Trägerelement (2) und die Hüllkörper (1) einteilig aus einem dünnen, elastischen Schlauchmaterial hergestellt sind, wobei die Hüllkörper (1) gleicher und/oder unterschiedlicher Größe durch Einschnürungen oder Schweißstege (4) des Schlauchmaterials begrenzt sind.

2. Vorrichtung (3) zur Dämpfung von Hydroschall nach Anspruch 1, **dadurch gekennzeichnet, dass** die Hüllkörper (1) untereinander mittels des Trägerelements (2) flexibel verbunden sind.

3. Vorrichtung (3) zur Dämpfung von Hydroschall nach zumindest einem der vorhergehenden Ansprüche, **dadurch gekennzeichnet, dass** die Hüllkörper (1) flexibel sind und aus einem dünnwandigen, elastischen Material bestehen.

4. Vorrichtung (3) zur Dämpfung von Hydroschall nach zumindest einem der vorhergehenden Ansprüche, **dadurch gekennzeichnet, dass** die Hüllkörper (1) und/oder das Trägerelement (2) in einem Käfig (12) angeordnet sind.

5. Vorrichtung (3) zur Dämpfung von Hydroschall nach Anspruch 4, **dadurch gekennzeichnet, dass** der Käfig (12) in seiner tragenden Struktur aus einem festen Material wie Metall und/oder Kunststoff besteht und/oder mehrere Käfige (12) über- und nebeneinander positionierbar sind.

6. Vorrichtung (3) zur Dämpfung von Hydroschall nach Anspruch 4 oder 5, **dadurch gekennzeichnet, dass** die Hüllkörper (1) mittels der Trägerelemente (2) in dem Käfig (12) festgelegt sind.

7. Vorrichtung (3) zur Dämpfung von Hydroschall nach zumindest einem der Ansprüche 5 bis 7, **dadurch gekennzeichnet, dass** zumindest zwei Käfige (12) ineinander teleskopisierbar anordenbar sind.

8. Vorrichtung (3) zur Dämpfung von Hydroschall nach einem der vorhergehenden Ansprüche, **dadurch gekennzeichnet, dass** die Hüllkörper (1) jeweils ein Ventil aufweisen und die Ventile mehrerer Hüllkörper (1) miteinander verbunden sind.

9. Vorrichtung (3) zur Dämpfung von Hydroschall nach zumindest einem der vorhergehenden Ansprüche, **dadurch gekennzeichnet, dass** jeder einzelne Hüllkörper (1) individuell mit unterschiedlichem Gas und/oder bei einem unterschiedlichen Druck befüllt ist.

10. Vorrichtung (3) zur Dämpfung von Hydroschall nach zumindest einem der vorhergehenden Ansprüche, **dadurch gekennzeichnet, dass** das weiche, offen- und/oder geschlossenporige Material ein hohes Dämpfungsvermögen aufweist.

11. Verfahren zur Dämpfung und Streuung von Hydroschall in einer Flüssigkeit mit einer Vorrichtung nach einem der vorangehenden Ansprüche, die um eine Hydroschallquelle radial, axial und in Umfangsrichtung beabstandet angeordnet und an dem Boden befestigt wird, wobei der Boden um die Hydroschallquelle herum mit auf dem Boden verteilten Käfigen, in denen die mit Gas und einem weichen, schaumartigen, offen- und/oder geschlossenporigen Material gefüllten Hüllkörper (1) angeordnet sind, bedeckt wird.

## Claims

1. Device (3) in a liquid for damping and scattering hydrosound in the liquid, in particular water (8), by means of an envelope body (1) enclosing a gas, wherein the device (3) can be flowed through by the liquid (8) and has a plurality of envelope bodies (1) each enclosing a gas, which are spaced apart from one another and are each surrounded by the liquid (8), wherein the device (3) further has a carrier element (2) and a mass body (10), wherein the envelope bodies (1) are arranged at a distance from one another on the carrier element (2) and the envelope bodies (1) can be arranged at a distance from one another radially, axially and in the circumferential direction with respect to a body (6) emitting a hydrosound, **characterised in that** the envelope bodies (1) are filled with the gas and a soft, foam-like, open-pored and/or closed-pored material, and the carrier element (2) and the envelope bodies (1) are produced in one piece from a thin, elastic tube material, the envelope bodies (1) of the same and/or different sizes being delimited by constrictions or welded webs (4) of the tube material.

2. Device (3) for damping hydrosound according to claim 1, **characterised in that** the envelope bodies (1) are flexibly connected to one another by means of the carrier element (2).

3. Device (3) for damping hydrosound according to at least one of the preceding claims, **characterised in that** the envelope bodies (1) are flexible and consist of a thin-walled, elastic material.

4. Device (3) for damping hydrosound according to at least one of the preceding claims, **characterised in that** the envelope bodies (1) and/or the carrier element (2) are arranged in a cage (12).

5. Device (3) for damping hydrosound according to claim 4, **characterised in that** the cage (12) consists in its supporting structure of a solid material such as metal and/or plastic and/or several cages (12) can be positioned above and next to one another.

6. Device (3) for damping hydrosound according to claim 4 or 5, **characterised in that** the envelope bodies (1) are fixed in the cage (12) by means of the support elements (2).

7. Device (3) for damping hydrosound according to at least one of claims 5 to 7, **characterised in that** at least two cages (12) can be arranged telescopically one inside the other.

8. Device (3) for damping hydrosound according to one of the preceding claims, **characterised in that** the envelope bodies (1) each have a valve and the valves of several envelope bodies (1) are connected to one another.

9. Device (3) for damping hydrosound according to at least one of the preceding claims, **characterised in that** each individual envelope body (1) is individually filled with different gas and/or at a different pressure.

10. Device (3) for damping hydrosound according to at least one of the preceding claims, **characterised in that** the soft, open-pored and/or closed-pored material has a high damping capacity.

11. Method for damping and scattering hydrosound in a liquid with a device according to one of the preceding claims, which is arranged around a hydrosound source radially, axially and circumferentially spaced apart and is fastened to the floor, **characterised in that** the floor around the hydrosound source is covered with envelope bodies (1) fastened to ropes or nets or with cages distributed on the floor, in which the envelope bodies (1) filled with gas and a soft, foam-like, open-pored and/or closed-pored material are arranged .

## Revendications

1. Dispositif (3) dans un liquide pour amortir et diffuser des hydrosons dans le liquide, en particulier dans de l'eau (8), au moyen d'un corps enveloppe (1) qui enferme un gaz, le dispositif (3) pouvant être traversé par le liquide (8) et présentant une multitude de corps enveloppes (1) qui enferment chacun un gaz et qui sont espacés les uns des autres et entourés chacun par le liquide (8), le dispositif (3) présentant en outre un élément porteur (2) et un corps de masse (10), les corps enveloppes (1) étant disposés à distance les uns des autres sur l'élément porteur (2), et les corps enveloppes (1) pouvant être disposés radialement, axialement et circonférentiellement à distance d'un corps (6) émettant des hydrosons, **caractérisé en ce que**
les corps enveloppes (1) sont remplis de gaz et d'un matériau souple, mousseux à pores ouverts et/ou fermés, et
l'élément porteur (2) et les corps enveloppes (1) sont réalisés d'un seul tenant en un matériau tubulaire élastique mince, les corps enveloppes (1) de même taille et/ou de différente taille étant délimités par des rétrécissements ou des cordons de soudure (4) du matériau tubulaire.

2. Dispositif (3) pour amortir des hydrosons selon la revendication 1,
**caractérisé en ce que**
les corps enveloppes (1) sont reliés entre eux de manière flexible au moyen de l'élément porteur (2).

3. Dispositif (3) pour amortir des hydrosons selon l'une au moins des revendications précédentes,
**caractérisé en ce que**
les corps enveloppes (1) sont flexibles et sont constitués en un matériau élastique à paroi mince.

4. Dispositif (3) pour amortir des hydrosons selon l'une au moins des revendications précédentes,
**caractérisé en ce que**
les corps enveloppes (1) et/ou l'élément porteur (2) est/sont disposé(s) dans une cage (12).

5. Dispositif (3) pour amortir des hydrosons selon la revendication 4,
**caractérisé en ce que**
la cage (12) est constituée, dans sa structure portante, d'un matériau solide tel que du métal et/ou de la matière plastique, et/ou plusieurs cages (12) peuvent être positionnées les unes au-dessus ou à côté des autres.

6. Dispositif (3) pour amortir des hydrosons selon la revendication 4 ou 5, **caractérisé en ce que**
les corps enveloppes (1) peuvent être immobilisés dans la cage (12) au moyen des éléments porteurs (2).

7. Dispositif (3) pour amortir des hydrosons selon l'une au moins des revendications 5 à 7,
**caractérisé en ce que**
au moins deux cages (12) peuvent être disposées l'une dans l'autre de façon télescopique.

8. Dispositif (3) pour amortir des hydrosons selon l'une au moins des revendications précédentes,
**caractérisé en ce que**
les corps enveloppes (1) présentent chacun une valve, et les valves de plusieurs corps enveloppes (1) sont reliées les unes aux autres.

9. Dispositif (3) pour amortir des hydrosons selon l'une au moins des revendications précédentes,
**caractérisé en ce que**
chaque corps enveloppe individuel (1) est rempli individuellement avec un gaz différent et/ou à une pression différente.

10. Dispositif (3) pour amortir des hydrosons selon l'une au moins des revendications précédentes,
**caractérisé en ce que**
le matériau souple à pores ouverts et/ou fermés présente une capacité d'amortissement élevée.

11. Procédé pour amortir et diffuser des hydrosons dans un liquide au moyen d'un dispositif selon l'une des revendications précédentes, qui est disposé radialement, axialement et circonférentiellement à distance autour d'une source hydro-sonore et est fixé au sol,
dans lequel le sol autour de la source hydro-sonore est recouvert de cages réparties au sol, dans lesquelles sont disposés les corps enveloppes (1) remplis de gaz et d'un matériau souple, mousseux à pores ouverts et/ou fermés.
